# EUROPÄISCHE PATENTSCHRIFT

(11) **EP 3 755 572 B1**
(45) Veröffentlichungstag und Bekanntmachung des Hinweises auf die Patenterteilung: **06.12.2023**
(21) Anmeldenummer: 19706561.8
(22) Anmeldetag: 19.02.2019
(51) Int. Cl.: B60L 58/20, H02P 25/22

(54) **ANTRIEBSSTRANG MIT ZWEI UNTERSCHIEDLICH SPANNUNG ABGEBENDEN BATTERIEN, ELEKTRO-ANTRIEBS-SYSTEM MIT NIEDERVOLTSTÄBE UMGEBENDE HOCHVOLT-WICKLUNGEN, ELEKTROMOTOR MIT SEPARATEM HOCHVOLT-PULSWECHSELRICHTER UND VERFAHREN ZUM BETREIBEN EINES ELEKTROMOTORS**
DRIVE TRAIN WITH TWO DIFFERENT VOLTAGE BATTERIES, ELECTRIC DRIVE SYSTEM WITH LOW VOLTAGE BARS SURROUNDED BY HIGH-VOLTAGE WINDINGS, ELECTRIC MOTOR WITH SEPARATE HIGH VOLTAGE PULSE INVERTER AND METHOD FOR OPERATING AN ELECTRIC MOTOR
TRAIN D'ENTRAÎNEMENT AVEC DEUX BATTERIES À TENSION DIFFÉRENTE, SYSTÈME D'ENTRAÎNEMENT ÉLECTRIQUE À FAIBLE TENSION ENVIRONNANT DES ENROULEMENT HAUTE TENSION, MOTEUR ÉLECTRIQUE AVEC INVERSEUR À IMPULSION HAUTE TENSION SÉPARÉ ET PROCÉDÉ POUR FAIRE FONCTIONNER UN MOTEUR ÉLECTRIQUE

(30) Priorität: 20.02.2018 DE 102018103709
(43) Veröffentlichungstag der Anmeldung: 30.12.2020
(73) Patentinhaber: Huber Automotive AG, 73347 Mühlhausen (DE)
(72) Erfinder: FEDYNA, Achim, 73463 Westhausen (DE)
(74) Vertreter: Winter, Brandl - Partnerschaft mbB
(86) Internationale Anmeldenummer: PCT/EP2019/054059
(87) Internationale Veröffentlichungsnummer: WO 2019/162256

(56) Entgegenhaltungen:
- DE-A1-102011 085 731
- DE-A1-102012 203 525
- DE-A1-102013 204 255
- DE-A1-102015 013 403
- DE-A1-102015 014 509
- DE-A1-102016 113 610
- JP-A- 2014 017 987
- US-A1- 2009 033 253
- Gurakuq Dajaku ET AL: "Intelligent Stator Cage Winding for Automotive Traction Electric Machines", EVS28 International Electric Vehicle Symposium and Exhibition , 6. Mai 2015 (2015-05-06), Seiten 1-8, XP055361580, Korea Gefunden im Internet: URL:http://www.evs28.org/event_file/event_ file/1/pfile/EVS28_Full papers_dajaku.pdf [gefunden am 2017-04-04]
- Florian Bachheibl ET AL: "Control Strategies and Functional Safety for the Intelligent Stator Cage Drive (ISCAD)", EVS28 International Electric Vehicle Symposium and Exhibition , 3. Mai 2015 (2015-05-03), Seiten 1-9, XP055583932, Korea Gefunden im Internet: URL:http://www.evs28.org/event_file/event_ file/1/pfile/Control%20Strategies%20and%20 Functional%20Safety%20for%20the%20ISCAD%20 -%20Final.pdf [gefunden am 2019-04-29]

## Beschreibung

Insbesondere betrifft die Erfindung einen Antriebsstrang für ein Fahrzeug, wie ein Kraftfahrzeug, wie ein PKW oder ein Boot mit wenigstens einem Elektromotor, der zum Energieversorgen im Normalbetrieb mit einer Hochvolt-Batterie verbunden ist, wobei eine von der Hochvolt-Batterie separate Niedervolt-Batterie zur alternativen und/oder zusätzlichen Energieversorgung des Elektromotors vorgesehen ist.

Aus dem Stand der Technik sind bereits Antriebssysteme bekannt. Zum Beispiel offenbart die DE 10 2016 207 272 A1 ein Speichersystem zur Bereitstellung von elektrischer Leistung für den Antrieb eines Fahrzeugs. Das Speichersystem umfasst ein erstes und ein zweites Speichermodul zur Speicherung von elektrischer Energie. Außerdem umfasst das Speichersystem eine Schalteinheit, die eingerichtet ist, das erste Speichermodul und das zweite Speichermodul für einen Ladevorgang in Serie zu schalten und für den Antrieb des Fahrzeugs parallel zu schalten. Des Weiteren umfasst das Speichersystem eine Steuereinheit, die eingerichtet ist, ein oder mehrere Maßnahmen zu veranlassen, um einen Unterschied eines Ladezustands des ersten Speichermoduls und eines Ladezustands des zweiten Speichermoduls in Vorbereitung auf ein Parallel-Schalten des ersten Speichermoduls mit dem zweiten Speichermodul zu reduzieren.

Aus der DE 10 2012 203 525 A1 ist ein Fahrzeug mit einer mehrphasigen elektrischen Maschine, mit einem ersten Teilbordnetz, das eine erste Nenngleichspannungslage aufweist, und mit einem zweiten Teilbordnetz, das eine zweite Nenngleichspannungslage aufweist, bekannt.

Aus US 2009/033 253 A1 ist ein elektrisches Traktionssystem für ein Fahrzeug mit einer Hochspannungsbatterie und einer Niederspannungsbatterie bekannt.

In der DE 10 2015 013 403 A1 beschreibt ein Elektro-Antriebssystem mit einem Elektromotor und einer Energieversorgung, bei dem die Energieversorgung radial außen am Elektromotor anliegend und in Umfangsrichtung um den Elektromotor herum angeordnet ist.

Die DE 10 2015 014 509 A1 beschreibt ein Elektro-Antriebssystem mit einem Elektromotor und einer Energieversorgung, bei dem die Energieversorgung axial benachbart zum Elektromotor und in Umfangsrichtung um die Drehachse des Elektromotors herum angeordnet ist.

Ferner beschreibt "Control Strategies and Functional Safety fort he Intelligent Stator Cage Drive" aus EVS28, KINTEX, Korea 3-6, 3015 ebenfalls den Oberbegriff des Anspruchs 1.

Bisher werden in ED-Systemen (Electric Drive) vielphasige Niedervolt-Antriebe mit integrierten Niedervolt-Pulswechselrichtern sowie Niedervolt-Batterien verwendet. Daher kann aufgrund der niedrigen Spannungen das System hoch integriert ausgeführt/durchgeführt werden, und der Pulswechselrichter durch MOSFETs realisiert werden. Das bisherige System ist somit hervorragend geeignet für Hybrid-/PHEV-Anwendungen, jedoch aufgrund der niedrigen Spannungen nicht für EVs (Electric Vehicle), da die Schnelladefähigkeit auf diese Weise kaum zu realisieren ist. Eine PHEV-Anwendung ist im Prinzip ein "Hybrid", ergo ein elektrische Energie nutzendes System mit größerer Batterie und der Möglichkeit die Batterie an einem Standardstromanschluss oder an einem speziellen Ladegerät zu laden. Eine Kombination von einer Hochvolt-Batterie und einer Niedervolt-Batterie gemäß der vorliegenden Erfindung, ist in der Form noch nicht bekannt. Bisher wurde bei einer Kombination der Niedervolt-Batterie und der Hochvolt-Batterie in einem Fahrzeug die Niedervolt-Batterie zum Versorgen kleiner elektrischer Verbraucher, wie der Bordelektronik, verwendet.

Weiterhin offenbart zum Beispiel die DE 10 2014 013 195 A1 einen Antriebsstrang für ein Fahrzeug, insbesondere ein Hybridfahrzeug, mit einem zwei Teilgetriebe aufweisenden Doppelkupplungsgetriebe, und mit wenigstens einer seitlich der Teilgetriebe und achsparallel zu diesen angeordneten und in einem Motorbetrieb und einem Generatorbetrieb betreibbaren elektrischen Maschine, welche mit einem der Teilgetriebe gekoppelt ist, wobei die elektrische Maschine wenigstens einen ersten Anschluss, über welchen die elektrische Maschine mit einem mit einer ersten elektrischen Spannung betreibbaren ersten Stromnetz des Fahrzeugs elektrisch verbindbar ist, und wenigstens einen zweiten Anschluss aufweist, über welchen die elektrische Maschine mit einem mit einer gegenüber der ersten elektrischen Spannung höheren zweiten elektrischen Spannung betreibbaren zweiten Stromnetz des Fahrzeugs elektrisch verbindbar ist.

Es ist die Aufgabe der Erfindung eine bedarfsgerechtere Energiezurverfügungstellung zu ermöglichen. Ferner soll eine kostengünstige und einfach in bestehende Fahrzeugantriebskonzepte zu integrierende Modulausprägung zur Verfügung gestellt werden. Zusätzlich soll ein Einsatz in Hausenergieversorgungssystemen nicht ausgeschlossen sind.

Die Aufgabe der Erfindung wird bei einer gattungsmäßigen Vorrichtung erfindungsgemäß dadurch gelöst, dass die Niedervolt-Batterie zur Abgabe einer Spannung kleiner 60 V ausgelegt ist, um einen Niedervolt-Antrieb mit Niedervoltstäben über einen Niedervolt-Pulswechselrichter und die Hochvolt-Batterie zur Abgabe einer Spannung von größer 60 V ausgelegt ist, um einen Hochvolt-Antrieb mit Hochvolt-Wicklungen ausgelegt sind, um die Niedervoltstäbe zu umgeben. Somit wird durch diese Kombination der Hochvolt-Batterie und der Niedervolt-Batterie, die benötigte Leistung zum Betreiben des Elektromotors sowohl auf die Niedervolt-Batterie als auch auf die Hochvolt-Batterie verteilt. Ein Vorteil hierbei ist, dass die Kabel und Anschlüsse an die jeweils benötigten Bedingungen einer Hochvolt-Batterie oder einer Niedervolt-Batterie angepasst sind und dadurch unnötig schwere und große Kabel vermieden werden.

Es wird somit ein Antriebsstrang für ein Fahrzeug bereitgestellt, bei welchem eine Niedervolt-Batterie derart erweitert wird, dass der vollständig benötigte (zu erwartende) Leistungsumfang eines Fahrzeugs abgedeckt wird. Zusätzlich werden aber auch die Vorteile, welche eine einzelne Hochvolt-Batterie und eine einzelne Niedervolt-Batterie mit sich bringen, genutzt. Durch den Einsatz einer solchen erweiterten Niedervolt-Batterie in dem Antriebsstrang eines Fahrzeugs, wird zudem eine gewichtsminimierte und bauraumeffiziente Baueinheit zur Verfügung gestellt, die gleichzeitig universal einsetzbar ist.

Vorteilhafte Ausführungsformen werden in den Unteransprüchen beansprucht und werden nachfolgend näher erläutert.

So ist es erfindungsgemäss, wenn die Hochvolt-Batterie so ausgelegt ist, um einen Hochvolt-Antrieb über einen Hochvolt-Pulswechselrichter zu versorgen/anzusteuern. Durch die Verwendung eines Hochvolt-Antriebs und eines Hochvolt-Pulswechselrichters für die Hochvolt-Batterie kann die vorliegende Erfindung die Hochvoltladefähigkeit inklusive Schnellladefähigkeit bis zu einer bestimmten Ladeleistung bereitstellen. Die Hochvoltladefähigkeit weist hierbei die Vorteile der Schnellladefähigkeit auf, welche in dem bereits bekannten System nicht genutzt werden konnte. Diese Hochvoltladefähigkeit liefert eine Leistung in der vorliegenden Erfindung bis zu jener Ladeleistung, welche der Leistung eines Hochvolt-Inverters entspricht.

Ferner ist es erfindungsgemäss, wenn die Niedervolt-Batterie so ausgelegt ist, um einen integrierten Niedervolt-Antrieb über einen Niedervolt-Pulswechselrichter, welcher mit MOSFETs realisiert werden kann, zu versorgen/anzusteuern. Die separate Anordnung der Niedervolt-Batterie inklusive Niedervolt-Antrieb und Niedervolt-Pulswechselrichter ermöglicht das Bewältigen von Spitzenleistungen/Peakleistungen und ermöglich daher in der vorliegenden Erfindung, dass der von den Hochvolt-Komponenten nicht abgedeckte Leistungsbereich, in dem also die Spitzenlasten auftreten, durch die Niedervolt-Komponenten abgedeckt wird.

Insbesondere wenn der Hochvolt-Antrieb dreiphasig oder mehrphasig ist, ist es dem Antriebsstrang möglich nur mit kleinen Strömen zu arbeiten. Dies hat den Vorteil, dass keine großen bzw. schweren Kabel verbaut werden müssen und eine kompakte und leichte Bauweise realisiert werden kann. Das bedeutet des Weiteren, dass der Hochvolt-Pulswechselrichter mit Si-, SiC- oder GaN-Schaltern/Transistoren realisiert werden kann und daher auf IGBTs verzichtet werden kann. Ein IGBT (insulated-gate bipolar transistor) ist ein Bipolartransistor mit einer isolierten Gate-Elektrode, also ein Halbleiterbauelement, das sowohl die Vorteile eines Bipolartransistors, wie ein gutes Durchflussverhalten, eine hohe Sperrspannung und Robustheit, als auch die Vorteile eines Feldeffekttransistors, wie einer nahezu leistungslosen Auswertung, vereinigt. Ein IGBT weist jedoch hohe Schaltverluste auf und somit ist die maximale Frequenz in der Praxis auf 20 kHz begrenzt. Die in der vorliegenden Erfindung verbauten Schalter weisen hingegen eine hohe Schaltfrequenz auf. Beispielsweise eignet sich ein GaN-Transistor für besonders hohe Schaltfrequenzen von bis zu 1 MHz und bietet gleichzeitig deutlich geringere Schaltverluste, wodurch kompaktere Geräte und bessere Wirkungsgrade ermöglicht werden. Ein weiterer Nutzen sind die geringen EMV-Aufwände im Hochvolt-Kreis, also der Aufwand der in puncto elektromagnetischer Verträglichkeit zu tätigen ist. Vor allem die GaN-Transistoren bewirken schon gegenüber den Si-Transistoren eine Kostenreduktion und ein Materialersparnis.

Es ist bevorzugt, wenn der Niedervolt-Antrieb vielphasig ist, das heißt mehr als 3 Phasen enthält. Dies bringt den Vorteil niedriger Spannungen mit sich und das System kann hochintegriert ausgeführt/durchgeführt werden.

Weiterhin ist es zweckmäßig, wenn der Hochvolt-Pulswechselrichter ein Pulswechselrichter ist, der als Hochvolt-Inverter ausgebildet ist. Hierbei hat der Inverter, auch Leistungselektronik genannt, die Aufgabe, die Gleichspannung der Hochvolt-Batterie in eine 3-Phasen-Wechselspannung, oder bei Bedarf die 3-Phasen-Wechselspannung in eine Gleichspannung zur Speicherung in der Hochvolt-Batterie umzuwandeln und ist dabei das Bindeglied zwischen der Hochvolt-Batterie und dem Hochvolt-Antriebs-System.

Es ist bevorzugt, wenn die Komponente, die die Hochvoltspannung bereitstellt, eine externe Batterie, ein Range Extender oder ein Brennstoffzellen-System ist. Bei einem Range Extender handelt es sich um ein zusätzliches Aggregat, um die Reichweite eines Fahrzeugs zu erhöhen, daher auch als "Reichweitenverlängerer" bekannt. Eine Verwendbarkeit dieses Systems steht nicht nur Hybridfahrzeugen zur Verfügung, sondern auch für reine BEVs (Battery Electric Vehicle). Mit anderen Worten wird im Folgenden die Realisierung mit einer externen Batterie mit hohem Energiegehalt, zum Beispiel 100kWh, angenommen.

Ein Vorteil der Hochvolt-Batterie, die ausgelegt ist, um die im Normalbetrieb abzurufende mittlere Leistung, die kleiner ist als die vorgesehene Spitzenleistung des Gesamtsystems und der mittleren Dauerleistung entspricht, von 20 bis 30 kW +/- 10kW zu liefern ist, dass über die Hochvolt-Pfade zu der Hochvolt-Batterie nur niedrige Ströme fließen. Dies ist nur dadurch gewährleistet, dass die Hochvolt-Batterie ausschließlich die mittlere Fahrleistung zur Verfügung stellt und die Spitzenleistungen nicht zu versorgen hat. Somit fließt aus der externen Batterie, der Hochvolt-Batterie, unter einer Leistungsannahme von 25 kW ein Strom von 30 Ampere (25 kW / 800 V = 30 A) Im Vergleich dazu arbeiten heutige Inverter mit Spitzenleistungen von 150 kWh, wodurch Ströme von mehreren 100 Ampere fließen.

Des Weiteren ist es von Vorteil, wenn die Niedervolt-Batterie so ausgelegt ist, um die im Betrieb abzurufende Spitzenleistung entweder alleine oder zusammen mit dem Hochvoltabschnitt zu liefern. Dadurch ist in Zusammenarbeit mit der Hochvolt-Batterie der gesamt benötigte Leistungsbereich, der zum Betreiben eines Elektromotors benötigt wird, abgedeckt.

Üblicherweise ist die Hochvolt-Batterie über einen Hochvolt-Pfad mit dem Hochvolt-Pulswechselrichter verbunden, wobei der Hochvolt-Pfad separat zu der Verbindung der Niedervolt-Batterie zu dem Niedervolt-Pulswechselrichter ausgebildet ist. Das hat den Vorteil, dass für den jeweiligen Antrieb verschieden große Ströme und somit auch verschieden große und dicke Kabel verwendet werden können. Dies begründet sich dadurch, dass wenn die Spannung hoch ist die Ströme klein sind, für die dann fließenden kleinen Ströme dünne Kabel ausreichend sind. In anderen Worten wird hierdurch eine weitere Redundanz durch den Antrieb des Elektromotors einmal über den Hochvolt-Pfad aus der Hochvolt-Batterie und aus der Niedervolt-Batterie über den Niedervolt-Antrieb erreicht.

Zudem hat der Antriebsstrang den Vorteil, wenn der Hochvolt-Pulswechselrichter zum Nutzen von Strömen, die mit etwa 30 A beaufschlagt sind, ausgelegt ist, dass der Anschluss der Hochvolt-Batterie über dünne und leicht zu verlegende Kabel ausgebildet ist. Dadurch wird die angenommene Leistung von 25 kW zur Verfügung gestellt und die Hochvolt-Pfade werden mit einer Spannung von 800 Volt beaufschlagt.

Zweckmäßigerweise ist die Niedervolt-Batterie so eingebunden und ausgelegt, um rekuperierte Energie in einer Niedervolt-Batterie zu speichern. Rekuperation ist in einem Elektroauto ein System, durch welches Energie zurückgewonnen werden kann. Solch eine Energie wird beispielsweise beim Bremsen gewonnen. Durch die gegebene Möglichkeit des Ladens der Niedervolt-Batterie, mittels Rekuperation oder über die Hochvolt-Batterie und deren Inverter, entfällt ein Niedervolt-Ladeanschluss für die integrierte ED-Batterie (Electric Drive-Batterie). Bei einer Leistungsabgabe von weniger als 25kW liefert der Hochvolt-Pulswechselrichter beispielsweise weiterhin 25kW elektrische Leistung. Die hierbei zu viel bereitgestellte Leistung kann wiederum in Form von rekuperativer Energie in der Hybrid-Batterie gespeichert werden. Es wird bevorzugt, wenn der Hochvolt-Pulswechselrichter ausgelegt ist, um mit einer Leistungsabgabe von 20 bis 30 kW betrieben zu werden. In anderen Worten liefert der Hochvolt-Pulswechselrichter 20kW elektrische Leistung, auch bei einer Leistungsabgabe von mehr als 25kW. Die restliche benötigte Leistung wird hierbei aus dem Niedervoltantrieb bereitgestellt. Alternativ kann der Hochvolt-Pulswechselrichter auch mit geringerer Leistungsabgabe betrieben werden (Betriebsstrategie).

Des Weiteren ist es von Vorteil, wenn die Hochvolt-Batterie so eingebunden und ausgelegt ist, um rekuperierte Energie zu speichern. Hierbei kann eine Rekuperation in die Hochvolt-Batterie vorgesehen sein, ist aber nicht zwingend nötig.

Zusätzlich ist es zweckmäßig wenn die Niedervolt-Batterie so ausgelegt und angesteuert ist, um auf einem vorbestimmten SoC-Level im Mittel gehalten zu werden. SoC wird als State-of-Charge bezeichnet und beschreibt den Ladezustand einer Batterie. Das heißt bei einem mittleren SoC-Level kann sowohl rekuperiert als auch Energie abgegeben werden. Dies bringt den Vorteil mit sich, dass ein Laden der Hybrid-Batterie von außen nicht mehr notwendig ist.

Zusätzlich ist es vorteilhaft, wenn der Hochvolt-Pulswechselrichter ausgelegt ist, um im Betrieb ein erstes Drehmoment in der einen Richtung zu erzeugen und der Niedervolt-Pulswechselrichter ausgelegt ist, um so betrieben zu werden, dass sich ein von ihm hervorgerufenes zweites Drehmoment mit dem ersten Drehmoment addiert, oder dass sich ein von ihm hervorgerufenes zweites Drehmoment mit dem ersten Drehmoment aufhebt oder teilweise aufhebt und Energie in der Niedervolt-Batterie beim Fahren oder im Stillstand des Fahrzeugs zurückgewonnen wird. Sollte ein Laden im Stillstand erwünscht sein ist dies somit möglich. In dem Fall arbeitet der Elektromotor in diesem Betriebsmodus als Trafo.

Weiter ist es bevorzugt, wenn ein Hochvoltauflader in einem Hochvolt-Zwischenkreis angeschlossen ist.

Es ist erfindungsgemäss, wenn eine Hochvolt-Batterie ausgelegt und eingebunden ist, um Energie in der Niedervolt-Batterie durch induktive Kopplung innerhalb des Elektromotors während des Normalbetriebs beim Fahren und im Stillstand zu übertragen. In anderen Worten ist somit der benötigte Aufwand für ein derartiges System eine zusätzliche 3- oder mehrphasige Hochvolt-Motorwicklung, die zusätzlich zum bestehenden Käfig-Stator in den Motor integriert wird.

Die Erfindung betrifft auch ein Elektro-Antriebs-System für ein Kraftfahrzeug, wie einen PKW, ein LKW oder ein anderes Nutzfahrzeug mit einem insbesondere erfindungsgemäß ausgebildeten Antriebsstrang, d.h. gemäß einem der vorstehenden Aspekte, und mit einem Elektromotor und einer Energieversorgung, wobei bspw. die Energieversorgung radial außen an einem Elektromotor anliegend ist und in Umfangsrichtung um den Elektromotor herum angeordnet ist, wobei Hochvolt-Wicklungen ausgelegt sind, um Niedervoltstäbe zu umgeben.

Des Weiteren betrifft die Erfindung auch einen Elektromotor für ein Kraftfahrzeug, wie einen PKW, einen LKW oder ein anderes Nutzfahrzeug, mit einem Niedervolt-Pulswechselrichter, der zum Wandeln eines von einer Niedervolt-Batterie gestellten Gleichstroms mit einer Spannung von unter 60 Volt im Wechselstrom ausgelegt ist, wobei ein vom Niedervolt-Pulswechselrichter, verbunden mit einem Niedervolt-Antrieb, separater Hochvolt-Pulswechselrichter vorhanden ist, der ausgelegt ist, um Spannung von über 60 V eines Gleichstroms in Wechselstrom zu wandeln, wobei Hochvolt-Wicklungen des Hochvolt-Antriebs ausgelegt sind, um Niedervoltstäbe des Niedervolt-Antriebs zu umgeben.
ein vom Niedervolt-Pulswechselrichter separater Hochvolt-Pulswechselrichter vorhanden ist, der ausgelegt ist, um Spannung von über 60 Volt eines Gleichstroms in Wechselstrom zu wandeln. Zweckmäßigerweise ist dieser Elektromotor für einen vorteilhafterweise erfindungsgemäßen Antriebsstrang vorgesehen.

Ferner kann die Erfindung dadurch weitergebildet werden, dass ein Elektro-Antriebs-System, insbesondere für Fahrzeuge, einen Elektromotor und eine Energieversorgung umfasst, wobei die Energieversorgung radial außen am Elektromotor anliegend und in Umfangsrichtung um den Elektromotor herum angeordnet ist, insbesondere in einer Winkelstreckung von 360 Grad.

Auch ist es zweckmäßig, wenn die Energieversorgung in einem hohlzylindrischen Gehäuse aufgenommen ist, in dessen inneren hohlen Bereich der Elektromotor angeordnet ist, insbesondere wobei die Zylinderachse und die Motorachse kollinear liegen.

Es ist vorteilhaft, wenn das hohlzylindrische Gehäuse eine Vielzahl von Ausnehmungen, insbesondere zylindrische Ausnehmungen aufweist, bevorzugt, die sich in axialer Richtung erstrecken, in welchen Energiespeicherzellen aufgenommen sind oder zumindest aufnehmbar sind.

Zweckmäßigerweise ist das hohlzylindrische Gehäuse in der axialen Richtung in mehrere Ringelemente unterteilt, insbesondere deren axiale Länge ist angepasst, um genau eine axial liegende Energiespeicherzelle in einer jeweiligen zylindrischen Ausnehmung aufzunehmen.

Ferner ist von Vorteil, wenn das hohlzylindrische Gehäuse, insbesondere jedes Ringelement, in Umfangsrichtung in wenigstens zwei Segmente unterteil ist.

Zudem wird bevorzugt, wenn zwischen je zwei benachbarten Segmenten von Ringelementen eine Verbindungsplatine, insbesondere eine kreisringsegementförmige Verbindungsplatine angeordnet ist.

Vorteilhafterweise sind mit den Verbindungsplatinen die Energiespeicherzellen wenigstens einer Teilanzahl, insbesondere gruppenweise oder aller an einer gemeinsamen Umfangsposition axial hintereinander angeordneter Segmente elektrisch in Reihe geschaltet.

Ferner ist es zweckmäßig, wenn in einem Bereich zwischen je zwei in Umfangsrichtung benachbarten Segmenten für alle axial hintereinander liegenden Segmente einer gemeinsamen Umfangsposition eine sich achsparallel erstreckende Platine angeordnet ist, insbesondere die sich im Wesentlichen über die gesamte axiale Länge des hohlzylindrischen Gehäuses der Energieversorgung erstreckt, wobei diese Platine mit jeder Verbindungsplatine zwischen zwei benachbart axial hintereinanderliegenden Segmenten elektrisch verbunden ist.

Es wird bevorzugt, wenn die Platine eine Elektronik zum Energiespeicherzellenmanagement, insbesondere zur Prüfung der insbesondere in jedem Segment oder in alle Segmenten einer gemeinsamen Umfangsposition gereihten Zellspannungen umfasst.

Zweckmäßigerweise ist in zumindest teilweiser Überdeckung der axialen Stirnflächen von der Energieversorgungseinheit und dem Elektromotor wenigstens eine Steuerplatine angeordnet, die eingerichtet ist, um die Energie der Energieversorgungseinheit auf das Statorbestromungssystem des Elektromotors zu verteilen, insbesondere gesteuert oder geregelt zu verteilen.

Es ist von Vorteil, wenn jeweils einem jedem in Umfangsrichtung erstreckten Segment des hohlzylindrischen Gehäuses der Energieversorgung oder jeweils allen an einer gemeinsamen Umfangsposition angeordneten Segmenten von axial hintereinanderliegenden Ringelementen eine eigene Steuerplatine zugeordnet ist, insbesondere die kreisringsegmentförmig ausgebildet ist, die an einen Teil des Statorbestromungssystems angeschlossen ist, insbesondere der sich über denselben Winkelbereich erstreckt, wie das betreffende Segment.

Es ist bevorzugt, wenn durch die wenigstens eine Steuerplatine eine Leistungselektronik, insbesondere durch alle den Segmenten zugeordneten, Steuerplatinen jeweils eine Leistungselektronik zur Steuerung des Elektromotors ausgebildet ist, an der die jeweilige Spannung insbesondere die gereihte Summenspannungen von den an einer gemeinsamen Umfangsposition axial hintereinanderliegenden Segmenten elektrisch angeschaltet ist, insbesondere so dass der Elektromotor mit der Energie und Leistungselektronik alleine der Segmente einer einzigen Umfangsposition betreibbar ist.

Erfindungsgemäss ist das Statorbestromungssystem durch eine Vielzahl bestrombarer Stäbe ausgebildet ist, die sich in axialer Richtung durch den Stator des Elektromotors erstrecken und an einem ihrer Enden mit einem gemeinsamen Kurzschlussring verbunden sind und an dem anderen Ende mit einer Steuerplatine verbunden sind, insbesondere einer Steuerplatine wie oben beschrieben.

Ferner ist es zweckmäßig, wenn das Statorbestromungssystem eine Vielzahl von Bestromungseinheiten, insbesondere Wicklungen oder bevorzugt Stäben aufweist, die einer Anzahl von mehr als 3 Phasen, bevorzugt wenigstens 6 Phasen zugeordnet sind, insbesondere wobei die Spannungsdifferenz zwischen zwei Phasen oder einer Phase und Masse kleiner gleich 60 Volt ist.

Vorteilhafterweise ist das hohlzylindrische Gehäuse der Energieversorgung, insbesondere jedes Segment in axialer Richtung auf die äußere Mantelfläche des Elektromotors aufsteckbar oder aufschiebbar, insbesondere mittels radialen Stegen, die zumindest endseitig in axialen Führungsnute gleitend eingreifen.

Zudem sind die Energieversorgung und der Elektromotor zueinander wärmetechnisch isoliert, insbesondere durch eine radiale Beabstandung, bevorzugt über welche hinweg die Gehäuse von der Energieversorgung und des Elektromotors nur durch Stege verbunden sind.

Es wird bevorzugt, wenn der Elektromotor und die Energieversorgung jeweils eigene und voneinander unabhängige Entwärmungssysteme aufweisen, insbesondere durch Heatpipes, die sich axial durch den Elektromotor und/oder die Energieversorgung erstrecken.

Vorteilhaft ist, wenn in der Blechung des Elektromotors wenigstens eine Nut bis zum Innendurchmesser des Stators verlängert ist, in welcher ein Magnetfeldsensor angeordnet ist, der von der Leistungselektronik einer Steuerplatine in die Nut hineinragt.

Zudem ist es zweckmäßig, wenn zur Drehwinkelerfassung auf der Welle des Elektromotors wenigstens ein Permanentmagnet angeordnet ist, dessen Magnetfeld durch einen auf einer darüber liegenden Platine, insbesondere auf einer stirnseitigen Steuerplatine montierten Drehwinkelsensor, insbesondere 180-Grad-Sensor, erfassbar ist.

Die Erfindung betrifft des Weiteren ein Verfahren zum Betreiben eines Elektromotors in einem Kraftfahrzeug, wie einem PKW, einem LKW oder einem anderen Nutzfahrzeug, mit einem Antriebsstrang gemäß einem der vorstehenden Aspekte, wobei eine Hochvolt-Batterie über einen Hochvolt-Pfad den Hochvolt-Antrieb mit Spannung versorgt und eine Niedervolt-Batterie über eine Niedervolt-Pfad den Niedervolt-Antrieb mit Spannung versorgt, wobei die Spannung im Hochvolt-Pfad wenigstens viermal so groß ist wie in dem Niedervolt-Pfad.

Auch kann die Erfindung dadurch weitergebildet werden, dass die Niedervolt-Batterien ausgebildet sind, um als ein Energiespeichermodul für ein Fahrzeugantriebssystem zur Energieversorgung eines, beispielsweise auch als Generator verwendbaren Elektromotors in einem Fahrzeug einerseits, wie einem land-, wasser- oder luftgebundenen Gefährt, etwa einem PKW, einem LKW, einem Zug, einem Schiff oder einem Flugzeug, oder zur Energieversorgung eines Aggregats andererseits, wie einer Pumpe oder eines Generators, wobei eine Vielzahl einzelner Energiespeicherzellen zu einer Batterie, bspw. als ein Paket kombiniert/zusammengefasst sind, wobei zumindest einige der Energiespeicherzellen, vorzugsweise alle Energiespeicherzellen mit mehreren Verbindungsplatinen elektrisch leitend verbunden sind, wobei die Verbindungsplatinen zum Kontaktieren wenigstens einer Elektronikplatine, evtl. mit einem integrierten Batteriemanagementsystem (BMS), vorbereitet/ausgelegt zu sein.

Zweckmäßigerweise ist eine elektrische Verbindung einer Energiespeicherzelle mit den Verbindungsplatinen über wenigstens ein, vorzugsweise vollständig, unisoliertes Leiterstück realisiert. Es kann auf eine Isolierung verzichtet werden und durch geschickte Wahl des Verbindungsortes können "kleinquerschnittige" Verbinder (d.h. Verbinder mit kleinem Querschnitt) eingesetzt werden. Auf diese Weise kann auf den gewichtsintensiven Einsatz isolierter Kabel verzichtet werden und der relativ dazu teure Einsatz von Steckern und Steckeraufnahmen entfallen.

Durch die eingesetzten Verbindungsplatinen in dem Energiespeichermodul, welche zweckmäßigerweise über und unter den Energiespeicherzellen angeordnet sind, ist es diesen zum einen ermöglicht mehrere Energiespeicherzellen miteinander elektrisch zu verbinden. Zum anderen wird es aber auch möglich die Energiespeicherzellen auf kompakte Weise zu einer Batterie, wie beispielsweise zu einem Paket, zu kombinieren. Dies hat den Vorteil, dass die Batterie ein kleinbauendes Energiespeichermodul darstellt, welches sich ohne großen Aufwand in einem Fahrzeug oder Ähnlichem verbauen lässt.

So ist es beispielsweise zweckmäßig, wenn das Leiterstück als Draht oder Bändchen ausgebildet ist und/oder dass das Leiterstück federnde oder rückstellende Eigenschaften besitzt. Durch die Verwendung eines Leiterstücks, welches als Draht oder Bändchen ausgebildet ist, kann auf einen erheblichen Aufwand die Energiespeicherzellenpole mittels Leitungen miteinander zu verdrahten, verzichtet werden. Durch das Ausnutzen der federnden oder rückstellenden Eigenschaften des Leiterstücks auf beiden Seiten der jeweiligen Energiespeicherzelle, geht der Kontakt aufgrund der Trägheitskräfte bei einem Schlag von außen nicht verloren, da hierbei auch der auf den Schlag folgende Rückschlag gefedert ist und die Energiespeicherzelle nach jeder Bewegung wieder in die ursprünglich Ausgangslage zurückgeführt wird. Wenn das Leiterstück als Draht oder Bändchen ausgebildet ist, ist zwischen der Energiespeicherzelle und den Verbindungsplatinen kein Bewegungsspielraum vorhanden. Ein Schlag von außen auf das Energiespeichermodul führt dann auch hier zu keinem Kontaktverlust, weil die schlagbedingte Verlagerung der Energiespeicherzelle in deren Initialposition endet.

Ferner ist es vorteilhaft, wenn sich das Leiterstück von einer der Energiespeicherzelle zugewandten Seite durch die Verbindungsplatine hindurch oder an ihr vorbei auf eine der Energiespeicherzelle abgewandte Seite der Verbindungsplatine erstreckt oder sich das Leiterstück von der Energiespeicherzelle weg nur bis zu der der Energiespeicherzelle zugewandten Seite der Verbindungsplatine erstreckt.

Somit ist in anderen Worten das eine Ende des Leiterstücks an immer jeweils einem Ende einer jeden Energiespeicherzelle fixiert und das andere Ende des Leiterstücks entweder auf der den Energiespeicherzellen jeweils abgewandten Oberfläche der Verbindungsplatine oder auf der den Energiespeicherzellen jeweils zugewandten Oberfläche der Verbindungsplatine fixiert. Auf diese Weise werden verschiedene Ausführungsformen ermöglicht, welche zwar jeweils ein kompaktes Energiespeichermodul ergeben und eine ordentliche elektrische Kontaktierung ermöglichen, aber für unterschiedliche Anwendungszwecke optimiert sind. Dabei müssen in beiden Fällen vorteilhafterweise die Leiterstücke nicht gekreuzt werden, was sonst mehr Platzbedarf und eine nötige Isolierung der Leiterstücke nach sich ziehen würde.

Insbesondere wenn beide Verbindungsplatinen mittig zu jeder Energiespeicherzelle in der jeweiligen Verbindungsplatine Durchgangsöffnungen, etwa nach Art von Löchern, insbesondere Bohrungen aufweisen, um das Leiterstück hindurchzuführen, kann eine einfache und platzsparende Verarbeitung der Energiespeicherzellen zu einem Energiespeichermodul erreicht werden.

Ein weiterer Vorteil entsteht, wenn die Länge des Leiterstücks bei dieser Art der Verarbeitung kleiner ist als der Durchmesser der Energiespeicherzelle, bspw. kleiner als ein 1/20 des Durchmessers der Energiespeicherzelle. Dadurch ist es nämlich möglich sowohl Platz zu sparen, als auch mit einem geringeren Gesamtgewicht des Energiespeichermoduls auszukommen. Die geringe Länge und der geringe Durchmesser eines jeden Leiterstücks wird unter anderem auch durch das Verwenden von Leiterbahnen auf den Verbindungsplatinen ermöglicht.

Es ist bevorzugt, wenn das Leiterstück an der Energiespeicherzelle mittels eines Punkt- und Laserschweißverfahrens oder Ultraschallbondens fixiert ist und wenn das Leiterstück an die Verbindungsplatine mittels Lötens oder Bondens fixiert ist. Auf diese Weise hält sich der Aufwand eine elektrische Verbindung zwischen den jeweiligen Energiespeicherzellenpolen herzustellen in Grenzen und ermöglicht den Einsatz bedarfsgerechter Verbindungsverfahren für die Kontaktierung.

Weiterhin ist es zweckmäßig, wenn das Leiterstück/die Leiterstücke überwiegend horizontal verlaufend ausgerichtet ist/sind und/oder auf einer Seite der Energiespeicherzellen verlaufen, da besonders dann keine (unnötig) langen Leiterstücke verwendet werden müssen.

Es ist zweckmäßig, wenn das Leiterstück als Feder ausgebildet ist, die eingesetzt ist, um die Energiespeicherzellen in dem Energiespeichermodul zu fixieren, wobei jede Feder so ausgerichtet ist, dass sie in Richtung der Längsachse der Energiespeicherzelle federt. Ein derartiger Aufbau bietet den Energiespeicherzellen etwas Bewegungsfreiraum zum Ausgleich von Schlägen von außen.

Es ist bevorzugt, wenn die Feder entweder an der Verbindungsplatine und/oder auch an der Energiespeicherzelle selbst befestigt ist. Hierbei ist für jeden Energiespeicherzellenpol nur eine Feder verwendet, welche mittig zu der Energiespeicherzelle angeordnet ist. Dadurch können die Abstände gleich gehalten werden, was einen Aufbau erleichtert und die Montage vereinfacht. Störeinflüsse zwischen den Verbindungen werden ferner vermieden.

Ein Vorteil der Kontaktierung mittels einer Feder als Leiterstück ist, wenn eine einzige Verbindungsplatine auf ihren beiden Seiten mit Energiespeicherzellen in elektrisch leitender Verbindung steht, insbesondere die eine Seite mit Energiespeicherzellen eines ersten Energiespeichermoduls und die zweite Seite mit Energiespeicherzellen eines zweiten Energiespeichermoduls. Somit wird sowohl auf (unnötiges) Verbindungsmaterial für die einzelnen Energiespeicherzellen verzichtet, als auch auf solche Leiterstücke, welche durch die Verbindungsplatinen hindurch geführt werden müssen und daher auf zwei unterschiedlichen Oberflächen der Verbindungsplatine angeordnet sind.

Des Weiteren ist es von Vorteil, wenn die Energiespeicherzellen des Energiespeichermoduls in der Batterie sowohl seriell als auch parallel miteinander verbunden sind. Die Verbindungsplatinen bieten dann die Möglichkeit eine serielle Verschaltung der Energiespeicherzellen mit Hilfe der auf den Verbindungsplatinen verwendeten Leiterbahnen durch kurze Leiterstücke zu erreichen.

Zusätzlich ist es zweckmäßig, wenn die Energiespeicherzellen in einem schachbrettartigen Muster oder nach Art einer dichten Packung angeordnet sind, um Bauraum zu sparen.

Zudem hat das Energiespeichermodul Vorteile, wenn die Elektronikbauteile mit einem Batteriemanagementsystem (BMS) auf der Elektronikplatine angeordnet sind, welche an einem distalen Ende der Batterie angebracht ist. Durch die besagte Platzierung kann das Batteriemanagementsystem in Kombination mit den Elektronikbauteilen in einem Stück an den Verbindungsplatinen angebracht werden. Es sei erwähnt, dass mehrere Elektronikplatinen auch zu einer gemeinsamen Elektronikplatine kombiniert werden können.

Es wird bevorzugt, wenn die Elektronikplatine mit einer Steckverbindung an die Verbindungsplatinen angeschlossen ist, um ein kompakteres System zu erhalten und eine unproblematische Kontaktierung sowie elektrische Verbindung zwischen dem Batteriemanagementsystem und den auf der Elektronikplatine verbauten Elektronikbauteilen zu ermöglichen. Auf diese Weise enthält das Energiespeichermodul einzelne Platinen welche ohne weitere Verdrahtung miteinander in Kontakt gebracht sind und auch ein Austausch bestimmter Komponenten wird erleichtert.

Es ist zweckmäßig, wenn bestimmte Elektronikbauteile von der Elektronikplatine auf die Verbindungsplatinen ausgelagert sind und dass Temperatursensoren direkt in die Batterie eingesetzt sind, wodurch zum einen auf der Elektronikplatine Platz für nicht auslagerbare Elektronikbauteile geschaffen ist, als auch die Möglichkeit einer gewissen Sortierung der Elektronikbauteile gegeben ist. Mit anderen Worten, bietet es sich an hier die Temperatursensoren direkt in die Batterie zu setzen. Somit ist es vorteilhaft, wenn auf der Elektronikplatine solche Elektronikbauteile verbaut sind, die Leistungselektronikerfordernissen genügen müssen und nicht ausgelagert werden. Unter Leistungselektronik wird ein Teilgebiet der Elektrotechnik verstanden, das sich mit der Umformung elektrischer Energie mit schaltenden elektronischen Bauelementen beschäftigt.

Zweckmäßigerweise ist die Steckverbindung so ausgelegt, dass sowohl Batteriemanagementsystem-Signale über die Verbindungsplatinen geleitet werden, als auch die Energieversorgung des Batteriemanagementsystems über die Steckverbindungen stattfindet.

Eine weitere Ausführungsform wird realisiert, wenn Kühlfluidleitmittel vorhanden sind, die zur Kühlung und zum Wärmeabtransport eingesetztes Fluid, wie Luft, gezielt in Längsrichtung der Energiespeicherzellen an diesen vorbei leiten, wobei aber ein Wärmeübergang von den Energiespeicherzellen zum Fluid gewährleistet ist. Hierdurch wird verhindert, dass die einzelnen Energiespeicherzellen überhitzen und somit möglichst alle Energiespeicherzellen die gleiche Temperatur haben.

Dafür ist es zweckmäßig, wenn das Energiespeichermodul und/oder die Energiespeichermodule in einem gemeinsamen/einheitlichen Gehäuse angeordnet sind, um so eine gleichmäßige Kühlung der Energiespeicherzellen zu gewährleisten, und wenn das Kühlfluidleitmittel nicht entweichen kann.

Letztlich ist ein Verfahren zum Kühlen wenigstens eines Energiespeichermoduls vorteilhaft, wobei ein Kühlfluidleitmittel verwendet wird, zum Leiten eines Kühlfluids, etwa Fluid, wie Luft, welches gezielt in Längsrichtung der Energiespeicherzellen an diesen vorbei geleitet wird, eingesetzt um eine Kühlung und einen Wärmeabtransport zu realisieren, wobei aber ein Wärmeübergang von den Energiespeicherzellen zum Fluid gewährleistet wird.

Die Erfindung wird nachfolgend mit Hilfe einer Zeichnung erläutert. Es zeigen:
Fig. 1 einen schematischen Aufbau eines Antriebsstrangs,
Fig. 2 einen schematischen Aufbau der Hochvolt-Komponenten und
Fig. 3 einen schematischen Aufbau der Niedervolt-Komponenten.

Die Figuren sind lediglich schematischer Natur und dienen ausschließlich dem Verständnis der Erfindung. Die gleichen Elemente sind mit denselben Bezugszeichen versehen.

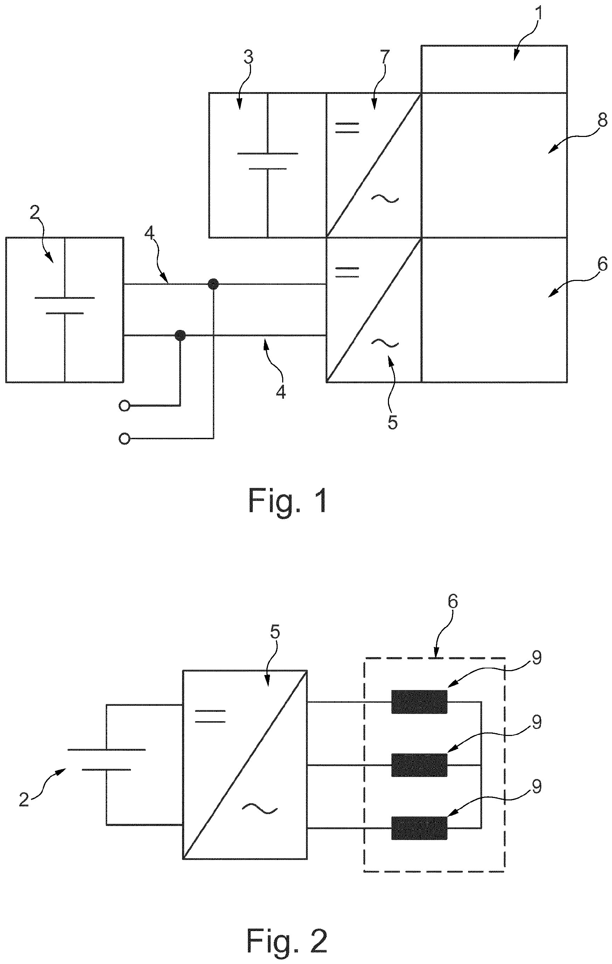

Fig. 1 zeigt einen schematischen Aufbau eines Antriebsstrangs. Der Antriebsstrang enthält einen Elektromotor 1, welcher sowohl mit einer Hochvolt-Batterie 2 und einer Niedervolt-Batterie 3 in Verbindung steht. Die Hochvolt-Batterie 2 ist über einen Hochvolt-Pfad 4 mit dem Hochvolt-Pulswechselrichter 5 verbunden. Der Hochvolt-Pulswechselrichter 5 treibt den Hochvolt-Antrieb 6 an. Der Hochvolt-Antrieb 6 umfasst drei Hochvoltphasen aus. Die Niedervolt-Batterie 3 steht mit dem Niedervolt-Pulswechselrichter 7 in Verbindung, welcher den Niedervolt-Antrieb 8 antreibt. Der Niedervolt-Antrieb 8 zeichnet sich durch beispielsweise 32 Phasen aus.

Fig. 2 zeigt einen schematischen Aufbau der Hochvolt-Komponenten. Die Hochvolt-Batterie 2 stellt die Energieversorgung des Hochvolt-Antriebs 6 dar. Der Hochvolt-Antrieb 6 ist über einen Hochvolt-Pulswechselrichter 5 mit der Hochvolt-Batterie 2 elektrisch verbunden. Der Hochvolt-Antrieb 6 wird in der Fig. 2 durch drei Hochvolt-Wicklungen 9 dargestellt, welche den drei oben beschriebenen Phasen entsprechen. Die Darstellung des Hochvolt-Antriebs 6 ist lediglich eine beispielhafte Ausführung und beschränkt diesen nicht auf drei Hochvolt-Wicklungen 9, sondern kann auch mehrere enthalten.

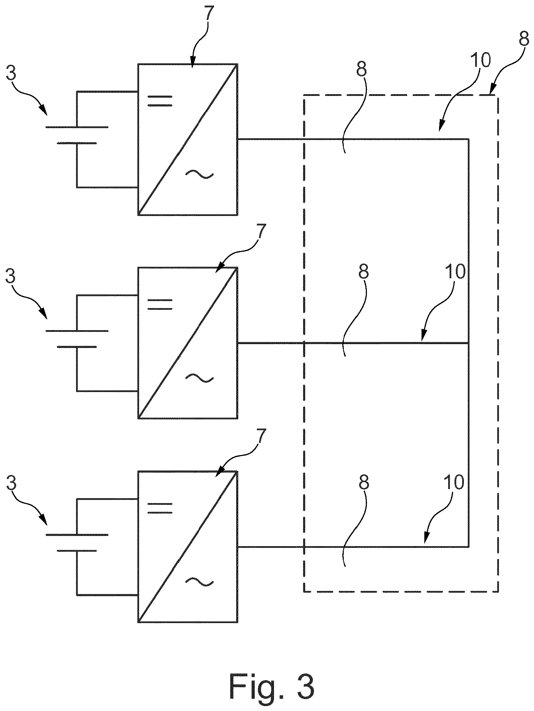

Fig. 3 zeigt einen schematischen Aufbau der Niedervolt-Komponenten. In Fig. 3 sind drei Niedervolt-Batterien 2 dargestellt, welche über jeweils einen Niedervolt-Pulswechselrichter 7 mit dem Niedervolt-Antrieb 8 elektrisch verbunden sind. Die Niedervolt-Pulswechselrichter 7 sind jeweils mit acht Niedervoltstäben 10 elektrisch verbunden. In dieser beispielhaften Ausführungsform besteht der Niedervolt-Antrieb 8 aus insgesamt 24 Niedervoltstäben 10. Diese Darstellung des Niedervolt-Antriebs 8 ist lediglich eine beispielhafte Ausführung und beschränkt diese nicht auf 24 Niedervoltstäbe 10, sondern kann auch 32 Niedervoltstäbe 10 oder eine andere Anzahl enthalten.

Weitere Ausführungsformen (nicht dargestellt) der vorliegenden Erfindung sind dadurch gekennzeichnet, dass die Hochvolt-Wicklungen 9 neben den Niedervoltstäben des InED-Antriebs (Integrated Electric Drive) angeordnet werden, die Hochvolt-Wicklungen 9 in Reihe (unterhalb) des Niedervolt-Antriebs 8 mit zwei unabhängigen Statoren, welche auf denselben Rotor einwirken, angeordnet werden oder ein InED-Segment (Integrated Electric Drive) durch eine Hochvolt-Wicklung 9 ersetzt wird, wie beispielsweise 24 statt 32 Niedervoltstäbe 10 und drei Hochvolt-Wicklungen 9.

### Bezugszeichen

- 1: Elektromotor
- 2: Hochvolt-Batterie
- 3: Niedervolt-Batterie
- 4: Hochvolt-Pfad
- 5: Hochvolt-Pulswechselrichter
- 6: Hochvolt-Antrieb
- 7: Niedervolt-Pulswechselrichter
- 8: Niedervolt-Antrieb
- 9: Hochvolt-Wicklung
- 10: Niedervoltstäbe

## Patentansprüche

1. Antriebsstrang für ein Fahrzeug, wie ein Kraftfahrzeug, mit wenigstens einem Elektromotor (1), einer Hochvolt-Batterie (2) verbunden mit dem Elektromotor (1) zum Energieversorgen des Elektromotors (1) im Normal-Betrieb und einer Niedervolt-Batterie (3) zum alternativen und/oder zusätzlichen Energieversorgen des Elektromotors (1), wobei die Hochvolt-Batterie (2) separat zu der Niedervolt-Batterie (3) vorgesehen ist, wobei der Elektromotor (1) einen Niedervolt-Antrieb (6) mit Niedervoltstäbe (10) und einen Hochvolt-Antrieb (8) mit Hochvolt-Wicklungen (9) hat, wobei die Hochvolt-Batterie (2) ausgelegt und eingebunden ist, um Energie in der Niedervolt-Batterie (3) durch induktive Kupplung innerhalb des Elektromotors (1) während des Normalbetriebs beim Fahren und im Stillstand zu übertragen, wobei die Niedervolt-Batterie (3) zur Abgabe einer Spannung kleiner 60 V ausgelegt ist, um den Niedervolt-Antrieb (8) mit den Niedervoltstäben (10) über einen Niedervolt-Pulswechselrichter (7) und die Hochvolt-Batterie (2) zur Abgabe einer Spannung von größer 60 V ausgelegt ist, um den Hochvolt-Antrieb (6) mit den Hochvolt-Wicklungen (9) über einen Hochvolt-Pulswechselrichter (5) zu versorgen,
wobei ein Statorbestromungssystem durch eine Viezahl bestrombarer Niedervoltstäbe (10) ausgebildet ist, die sich in axialer Richtung durch den Stator des Elektromotors (1) erstrecken und an einem ihrer Enden mit einem gemeinsamen Kurzschlussring verbunden sind und am dem anderen Ende mit einer Steuerplatine verbunden sind, wobei der Niedervolt-Antrieb (6) Niederspannungsstäbe (10) und der Hochvolt-Antrieb (8) Hochvolt-Wicklungen (9) aufweist, wobei die Hochvolt-Wicklungen (9) ausgelegt sind, um die Niedervoltstäbe (10) zu umgeben.

2. Antriebsstrang gemäß Anspruch 1, **dadurch gekennzeichnet, dass** die Hochvolt-Batterie (2) eine externe Batterie ist, welche über einen Hochvolt-Pfad (4) mit dem Hochvolt-Pulswechselrichter (5) verbunden ist.

3. Antriebsstrang gemäß Anspruch 1 oder 2, **dadurch gekennzeichnet, dass** die Hochvolt-Batterie (2) ausgelegt ist, um eine im Normalbetrieb abzurufende mittlere Leistung zu liefern, die kleiner ist als die vorgesehene Spitzenleistung eines Gesamtsystems und einer mittleren Dauerleistung entspricht.

4. Antriebsstrang gemäß einem der Ansprüche 1 bis 3, **dadurch gekennzeichnet, dass** die Niedervolt-Batterie (3) ausgelegt ist, um eine im Normalbetrieb abzurufende Spitzenleistung zu liefern.

5. Antriebsstrang gemäß einem der Ansprüche 1 bis 4, **dadurch gekennzeichnet, dass** ein Hochvolt-Pulswechselrichter (5) vorhanden ist, der ausgelegt ist, um im Betrieb ein erstes Drehmoment in der einen Richtung zu erzeugen und ein Niedervolt-Pulswechselrichter (7) ausgelegt ist, um so betrieben zu werden, dass sich ein von ihm hervorgerufenes zweites Drehmoment mit dem ersten Drehmoment addiert, oder dass sich ein von ihm hervorgerufenes zweites Drehmoment mit dem ersten Drehmoment aufhebt oder teilweise aufhebt und Energie in der Niedervolt-Batterie (3) beim Fahren oder im Stillstand des Fahrzeugs zurückgewonnen wird.

6. Antriebsstrang gemäß einem der Ansprüche 1 bis 6, **dadurch gekennzeichnet, dass** die Hochvolt-Batterie (2) vorhanden ist, wobei die Hochvolt-Batterie (2) ausgelegt und eingebunden ist, um Energie in die Niedervolt-Batterie (3) durch induktive Kopplung innerhalb des Elektromotors (1) während des Normalbetriebs beim Fahren und im Stillstand zu übertragen.

7. Elektro-Antriebs-System für ein Kraftfahrzeug mit einem Antriebsstrang gemäß einem der Ansprüche 1 bis 6, und mit einem Elektromotor (1) und einer Energieversorgung, wobei die Energieversorgung in Umfangsrichtung um den Elektromotor (1) herum angeordnet ist, **dadurch gekennzeichnet, dass** Hochvolt-Wicklungen (9) ausgelegt sind, um Niedervoltstäbe (10) zu umgeben.

8. Verfahren zum Betreiben eines Elektromotors (1) des Antriebsstrangs gemäß einem der Ansprüche 1 bis 6 in einem Kraftfahrzeug, **dadurch gekennzeichnet, dass** eine Hochvolt-Batterie (2) über einen Hochvolt-Pfad (4) den Hochvolt-Antrieb (6) mit Spannung versorgt und eine Niedervolt-Batterie (3) den Niedervolt-Antrieb (8) mit Spannung versorgt, wobei die Spannung im Hochvolt-Pfad (4) wenigstens 4-mal so groß ist, als die Versorgungsspannung des Niedervolt-Antriebs (8).

## Claims

1. A drive train for a vehicle, such as a motor vehicle, having at least one electric motor (1), a high-voltage battery (2) connected to the electric motor (1) for supplying energy to the electric motor (1) in normal operation and a low-voltage battery (3) for alternatively and/or additionally supplying energy to the electric motor (1), wherein the high-voltage battery (2) is provided separately from the low-voltage battery (3), wherein the electric motor (1) has a low-voltage drive (6) with low-voltage rods (10) and a high-voltage drive (8) with high-voltage windings (9), wherein the high-voltage battery is adapted and incorporated to transmit energy into the low-voltage battery (3) by inductive coupling within the electric motor (1) during normal operation while driving and at a standstill, wherein the low-voltage battery (3) is adapted to output a voltage of less than 60 V to supply the low-voltage drive (8) with the low-voltage rods (10) via a low-voltage pulse inverter (7) and the high-voltage battery (2) is adapted to output a voltage of greater than 60 V to supply the high-voltage drive (6) with the high-voltage windings (9) via a high-voltage pulse inverter (5), wherein a stator energization system is formed by a plurality of energizable low-voltage rods (10), which extend in the axial direction through the stator of the electric motor (1) and are connected at one of their ends to a common short-circuit ring and are connected at the other end to a control circuit board, wherein the low-voltage drive (6) comprises low-voltage rods (10) and the high-voltage drive (8) comprises high-voltage windings (9), wherein the high-voltage windings (9) are adapted to surround the low-voltage rods (10).

2. The drive train according to claim 1, **characterized in that** the high-voltage battery (2) is an external battery, which is connected via a high-voltage path (4) to the high-voltage pulse inverter (5).

3. The drive train according to claim 1 or 2, **characterized in that** the high-voltage battery (2) is adapted to supply an average power to be retrieved in normal operation, which is smaller than the intended peak power of an overall system and corresponds to an average continuous power.

4. The drive train according to one of the claims 1 to 3, **characterized in that** the low-voltage battery (3) is adapted to supply a peak power to be retrieved in normal operation.

5. The drive train according to one of the claims 1 to 4, **characterized in that** a high-voltage pulse inverter (5) is present, which is adapted to generate during operation a first torque in the one direction and a low-voltage pulse inverter (7) is adapted to be operated such that a second torque caused by it is added to the first torque, or that a second torque caused by it is cancelled or partially cancelled with the first torque and energy is recovered in the low-voltage battery (3) while driving or at a standstill of the vehicle.

6. The drive train according to one of the claims 1 to 6, **characterized in that** the high-voltage battery (2) is present, wherein the high-voltage battery (2) is adapted and incorporated to transmit energy into the low-voltage battery (3) by inductive coupling within the electric motor (1) during normal operation while driving and at a standstill.

7. An electric drive system for a motor vehicle having a drive train according to one of the claims 1 to 6, and having an electric motor (1) and an energy supply, wherein the energy supply is arranged in the circumferential direction around the electric motor (1), **characterized in that** high-voltage windings (9) are adapted to surround low-voltage rods (10).

8. A method for operating an electric motor (1) of the drive train according to one of the claims 1 to 6 in a motor vehicle, **characterized in that** a high-voltage battery (2) supplies via a high-voltage path (4) the high-voltage drive (6) with voltage and a low-voltage battery (3) supplies the low-voltage drive (8) with voltage, wherein the voltage in the high-voltage path (4) is at least 4 times as large as the supply voltage of the low-voltage drive (8).

## Revendications

1. Train d'entraînement pour un véhicule, tel qu'un véhicule automobile, avec au moins un moteur électrique (1), une batterie haute tension (2) reliée au moteur électrique (1) pour alimenter en énergie le moteur électrique (1) en fonctionnement normal et une batterie basse tension (3) pour alimenter en énergie le moteur électrique (1) de manière alternative et/ou supplémentaire, dans lequel la batterie haute tension (2) est prévue séparément de la batterie basse tension (3), dans lequel le moteur électrique (1) présente un entraînement basse tension (6) avec des barres basse tension (10) et un entraînement haute tension (8) avec des enroulements haute tension (9), dans lequel la batterie haute tension (2) est configurée et intégrée pour transférer de l'énergie dans la batterie basse tension (3) par couplage inductif à l'intérieur du moteur électrique (1) pendant le fonctionnement normal en marche et à l'arrêt, dans lequel la batterie basse tension (3) est configurée pour délivrer une tension inférieure à 60 V, pour alimenter l'entraînement basse tension (8) avec les barres basse tension (10) via un inverseur à impulsion basse tension (7) et la batterie haute tension (2) est configurée pour délivrer une tension supérieure à 60 V pour alimenter l'entraînement haute tension (6) avec les enroulements haute tension (9) via un inverseur à impulsion haute tension (5),
dans lequel un système d'alimentation de stator est réalisé par une pluralité de barres basse tension (10) pouvant être alimentées en courant, qui s'étendent en direction axiale à travers le stator du moteur électrique (1) et qui sont reliées à une de leurs extrémités à un anneau de court-circuit commun et à l'autre extrémité à une platine de commande, dans lequel l'entraînement basse tension (6) présente des barres basse tension (10) et l'entraînement à haute tension (8) présente des enroulements haute tension (9), dans lequel les enroulements haute tension (9) sont configurés pour entourer les barres basse tension (10).

2. Train d'entraînement selon la revendication 1, **caractérisé en ce que** la batterie haute tension (2) est une batterie externe qui est reliée à l'onduleur à impulsion haute tension (5) via un trajet haute tension (4).

3. Train d'entraînement selon la revendication 1 ou 2, **caractérisé en ce que** la batterie haute tension (2) est configurée pour fournir une puissance moyenne à appeler en fonctionnement normal qui est inférieure à la puissance de crête prévue d'un système complet et correspond à une puissance moyenne continue.

4. Train d'entraînement selon la revendication 1 à 3, **caractérisé en ce que** la batterie basse tension (3) est configurée pour fournir une puissance de crête à appeler en fonctionnement normal.

5. Train d'entraînement selon l'une quelconque des revendications 1 à 4, **caractérisé en ce qu'**il existe un inverseur à impulsion haute tension (5) qui est configuré pour générer, en fonctionnement, un premier couple dans un sens, et un inverseur à impulsion basse tension (7) configuré pour fonctionner de sorte qu'un second couple qu'il induit s'ajoute au premier couple, ou de sorte qu'un second couple qu'il induit s'annule ou s'annule partiellement avec le premier couple, et de l'énergie est récupérée dans la batterie basse tension (3) lorsque le véhicule roule ou est à l'arrêt.

6. Train d'entraînement selon l'une quelconque des revendications 1 à 6, **caractérisé en ce que** la batterie haute tension (2) est présente, dans lequel la batterie haute tension (2) est configurée et intégrée pour transférer de l'énergie dans la batterie basse tension (3) par couplage inductif à l'intérieur du moteur électrique (1) pendant le fonctionnement normal en marche et à l'arrêt.

7. Système d'entraînement électrique pour un véhicule automobile avec un train d'entraînement selon l'une quelconque des revendications 1 à 6, et avec un moteur électrique (1) et une alimentation en énergie, dans lequel l'alimentation en énergie est agencée de manière circonférentielle autour du moteur électrique (1), **caractérisé en ce que** des enroulements haute tension (9) sont configurés pour entourer des barres basse tension (10).

8. Procédé pour faire fonctionner un moteur électrique (1) du train d'entraînement selon l'une quelconque des revendications 1 à 6 dans un véhicule automobile, **caractérisé en ce qu'**une batterie haute tension (2) alimente en tension l'entraînement haute tension (6) via un trajet haute tension (4) et une batterie basse tension (3) alimente en tension l'entraînement basse tension (8), dans lequel la tension dans le trajet haute tension (4) est au moins 4 fois supérieure à la tension d'alimentation de l'entraînement basse tension (8).
